# EUROPÄISCHE PATENTANMELDUNG

(11) **EP 0 845 630 A2**
(43) Veröffentlichungstag der Anmeldung: **03.06.1998**
(21) Anmeldenummer: 97118520.2
(22) Anmeldetag: 24.10.1997
(51) Int. Cl.: F16L 41/08

(54) **Anbohrarmatur**

(30) Priorität: 30.11.1996 DE 19649731
(71) Anmelder: Friatec Aktiengesellschaft, 68229 Mannheim (DE)
(72) Erfinder: Schweitzer, Rüdiger, 69469 Weinheim (DE); Sichler, Wolfgang, 68239 Mannheim (DE); Kretz, Steffen, 68229 Mannheim (DE)
(74) Vertreter: Schmitt, Meinrad, Dipl.-Ing.

(57) **Zusammenfassung**

Eine Anbohrarmatur ist mit einem anzubohrenden Rohr, insbesondere durch Schweißen verbindbar und enthält einen Stutzen (4), in welchem ein Bohrer (26) axial bewegbar angeordnet ist und mit welchem ein Abzweigstutzen (12) verbunden ist. Die Anbohrarmatur soll dahingehend weitergebildet werden, daß mit geringem Fertigungsaufwand das Anbohren des Rohres funktionssicher durchführbar ist, wobei eine den Anforderungen entsprechende Abdichtung sowohl während des Anbohrens als auch nach Beendigung des Anbohrens gegeben sein soll. Es wird vorgeschlagen, daß der Stutzen (4) eine im wesentlichen glatte zylindrische Innenfläche (34) aufweist und der Bohrer (26) an seinem oberen freien Ende eine Erweiterung (30) oder einen Dichtring (54) enthält, welcher an der genannten Innenfläche (34) des Stutzens (4) anliegt, und daß der Bohrer (26) mittels einer mit dem Stutzen (4) verbindbaren Anbohrvorrichtung (36) axial bewegbar ist.

## Beschreibung

Die Erfindung bezieht sich auf eine Anbohrarmatur gemäß den im Oberbegriff des Patentanspruchs 1 angegebenen Merkmalen.

Eine derartige Anbohrarmatur ist aus der Patentschrift DE 38 30 395 C1 bekannt und ist mit einem anzubohrenden Rohr aus Kunststoff, insbesondere durch Schweißen, verbindbar. Die Anbohrarmatur enthält einen Stutzen, in welchem ein für das Anbohren des Rohres ausgebildeter Bohrer axial bewegbar angeordnet ist. In den Stutzen ist eine Hülse mit einem Innengewinde dicht und drehfest integriert. Der Bohrer weist ein in das genannte Innengewinde eingreifendes Außengewinde sowie einen Innensechskant für ein Werkzeug auf. Beim Drehen des eingesetzten Werkzeuges erfährt der Bohrer einen axialen Vorschub zum Durchbohren der Wand des mit der Anbohrarmatur verbundenen Rohres. Es ist ferner wenigstens ein Dichtring vorgesehen, um nach dem Anbohren ein Austreten des durch das Rohr strömenden Mediums zu unterbinden. Diese Anbohrarmatur hat sich in vielen Anwendungsfällen als sehr zweckmäßig erwiesen, erfordert aber einen gewissen Material- und Fertigungsaufwand.

Aus der Patentschrift DE 40 39 353 C1 ist eine Anordnung zum Verschließen einer Rohrleitung bekannt, auf deren Außenfläche ein Oberteil, insbesondere eine Metallschelle festlegbar ist. Das Oberteil enthält einen Stutzen, mit welchem ein Gehäuse einer Anbohrvorrichtung über ein Gewinde verbindbar ist. Die Anbohrvorrichtung enthält eine Gewindespindel, deren Außengewinde in ein Innengewinde des Gehäuses eingreift. Mit der Gewindespindel ist ein Bohrer verbindbar, welcher gleichzeitig als Verschlußstück ausgebildet ist. Beim Drehen der Gewindespindel erfährt diese ebenso wie der angekoppelte Bohrer einen axialen Vorschub, um das Kunststoffrohr anzubohren. Der Bohrer enthält ein Außengewinde, welches nach dem Anbohren eine Verankerung des Bohrers bzw. Verschlußstückes im Rohr gewährleistet. Nach dem Anbohren wird die drehfeste Verbindung des Bohrers von der Gewindespindel gelöst und das Gehäuse vom Oberteil entfernt, wobei der Bohrer als Verschlußstück im Rohr verbleibt.

Ferner ist aus dem US-Patent 40 63 844 eine Anbohrarmatur aus Kunststoff bekannt, deren Stutzen ein Innengewinde für den Bohrer enthält. Der Bohrer besitzt ferner einen Innensechskant für einen Imbusschlüssel und durch Drehen desselben erfährt der Bohrer den axialen Vorschub, wobei ein erhebliches Drehmoment aufgebracht werden muß. Das Innengewinde des Stutzens erstreckt sich über dessen gesamte Länge und nach dem Anbohren des Rohres erfolgt die Abdichtung lediglich über die Gewindeverbindung von Bohrer und Stutzen. Es muß mit einer nicht unerheblichen Leckage gerechnet werden, welche vor allem bei gasführenden Rohrleitungen unerwünscht ist.

Hiervon ausgehend liegt der Erfindung die Aufgabe zugrunde, die Anbohrarmatur der genannten Art dahingehend weiterzubilden, daß mit geringem Fertigungsaufwand das Anbohren des Rohres funktionssicher durchführbar ist. Das Anbohrstück soll eine den Anforderungen entsprechende Abdichtung während des Anbohrens und nach dem Anbohren aufweisen. Das Anbohrstück soll eine einfache Handhabung ermöglichen und nach dem Anbohren für eine lange Lebensdauer einer sichere Abdichtung gewährleisten. Schließlich soll die Anbohrarmatur einen geringen Materialaufwand erfordern.

Die Lösung dieser Aufgabe erfolgt gemäß den im Patentanspruch 1 angegebenen Merkmalen.

Die vorgeschlagene Kunststoff-Anbohrarmatur zeichnet sich durch eine funktionsgerechte Konstruktion aus und gewährleistet mit geringem Aufwand die Abdichtung im Anbohrbereich sowohl während des Anbohrens als auch nachfolgend während einer langen Lebensdauer von vielen Jahrzehnten. Der Stutzen enthält eine im wesentlichen zylindrisch ausgebildete und / oder glatte Innenfläche ohne Gewinde und besteht aus Kunststoff ohne Führungshülse aus Metall. Der Bohrer enthält an seinem oberen freien Ende eine radiale Erweiterung oder einen Dichtring, wobei die Erweiterung oder der Dichtring an der glatten zylindrischen Innenfläche des Stutzens anliegen. Hierdurch wird eine Führung und / oder eine funktionssichere Abdichtung zwischen Bohrer und Stutzen erreicht. Der axiale Vorschub des Bohrers erfolgt mittels einer mit dem Stutzen verbindbaren externen Anbohrvorrichtung. Zweckmäßig enthält der Stutzen einen Anschlag, mittels welchem ein Herauslösen des Bohrers unterbunden wird. Der Anschlag ist insbesondere integraler Bestandteil des Stutzens und / oder einteilig mit diesen aus Kunststoff gefertigt. Der vorzugsweise ringförmig ausgebildete Anschlag weist einen kleineren Innendurchmesser auf als die in Richtung zum Rohr sich anschließende zylindrische Innenfläche des Stutzens. Der Bohrer besitzt insbesondere an seinem dem Rohr abgewandten freien Ende eine Gegenfläche, welche zur Anlage an den genannten Anschlag des Stutzens bringbar ist. Die Gegenfläche ist vorzugsweise als axiale Stirnfläche einer radialen Erweiterung, insbesondere in Form eines Ringbundes ausgebildet, welcher zunächst an dem genannten ersten Anschlag anliegt und / oder in eine benachbartzum ersten Anschlag angeordnete Ringnut eingreift. In zweckmäßiger Weise schließt an die Ringnut, und zwar in Richtung zur Rohrseite, ein zweiter Anschlag an, welcher zunächst eine Arretierung des Bohrers im Zusammenspiel mit der genannten Erweiterung ermöglicht.

In einer anderen besonderen Ausgestaltung ist die dem genannten ersten Anschlag zugeordnete Anlagefläche des Bohrers als eine Ringfläche ausgebildet, welche bevorzugt einen Ansatz des Bohrers an dessen freiem oberen Ende umgibt. Hierbei enthält der ringförmig und radial nach innen gerichtete erste Anschlag wenigstens eine gleichfalls nach innen gerichtete Nase, welche in eine Umfangsnut des Bohrers bzw. dessen genannten Ansatzes eingreift und so den Bohrer in der oberen Endposition arretiert. Bei dieser besonderen Ausgestaltung enthält der Bohrer, zweckmäßig in seinem oberen Endbereich eine Dichtung, welche an der zylindrischen Innenfläche des Stutzens dichtend anliegt. In zweckmäßiger Weise ist auch der Bohrer im übrigen über einen wesentlichen Teil seiner Gesamtlänge gleichfalls zylindrisch ausgebildet. Der Bohrer wird erfindungsgemäß von der Innenseite bzw` der Innenfläche der Anbohrarmatur bei der Montage in den Stutzen eingesetzt und soweit zum Rohr abgewandten oberen Ende in den Stutzen geschoben, bis die Anlagefläche am Anschlag des Stutzens anliegt und/oder die Arretierung vorgenommen ist. Zur erfindungsgemäßen Arretierung des Bohrers in dieser oberen End- oder Grundposition sind Arretierungsmittel vorgesehen, welche insbesondere als die erwähnte Ringnut zwischen den beiden Anschlägen oder als die in eine Ringnut des Bohrers eingreifende Nase ausgebildet sind.

Weder der Stutzen noch der Bohrer besitzen ineinandergreifende Gewinde, sondern der axiale Vorschub wird von einer externen Anbohrvorrichtung aufgebracht, welche in bekannter Weise mit dem Stutzen sowie dem Bohrer in Eingriff bringbar ist. Im Inneren des Stutzens ist oberhalb einer Einmündung eines Abzweigstutzens in den Stutzen ein radial nach innen gerichteter Steg vorhanden, welcher an der zylindrischen Außenfläche des Bohrers anliegt. Dieser Steg dient in zweckmäßiger Weise zur Führung des Bohrers, wobei im übrigen zwischen der Außenfläche des Bohrers und der Innenfläche des Stutzens ein vorgegebener Ringspalt vorhanden ist. Mittels des Steges wird eine achsparallele Führung des Bohrers mit geringer Reibung gewährleistet, so daß der Einschubwiderstand beim axialen Vorschub des Bohrers während des Anbohrens und während des Zurückdrehens auf ein Minimum reduziert ist.

Grundsätzlich kann der Steg zur Führung in einzelne über den Umfang verteilte Segmente unterteilt sein. In besonders zweckmäßiger Weise ist der Steg jedoch über den Umfang als geschlossener Ring ausgebildet, welcher dichtend an der zylindrischen Außenfläche des Bohrers anliegt. Der Steg und die zylindrische Außenfläche des Bohrers sind derart aufeinander abgestimmt, daß eine Abdichtung gewährleistet ist, wobei die Federelastizität des Kunststoffs der Anbohrarmatur berücksichtigt ist. Nach dem Anbohren wird der Bohrer in seine Ausgangsposition innerhalb des Stutzens zurückgefahren, wobei nunmehr die genannten Arretierungsmittel ein unerwünschtes Herabgleiten oder gar ein Verschließen des Abzweigstutzens sicher unterbinden.

In einer besonderen Ausgestaltung der Erfindung ist die Anbohrarmatur mit einer Kappe verschließbar, welche über einen Schnappverschluß mit dem Stutzen verbindbar ist. Nach Beendigung des Anbohrens und Abziehen der Anbohrvorrichtung wird die Kappe auf das freie Ende des Stutzens aufgesetzt, insbesondere aufgeschraubt, bis ein Rastkörper der Kappe mit einem Rastelement des Stutzens in Eingriff gebracht ist. Hierzu muß beim Aufsetzen der Kappe ein vorgegebener Widerstand, insbesondere Einschraubwiderstand, überwunden werden. Aus dieser ersten Rastposition kann die Kappe bei Bedarf wieder gelöst werden. Zwischen der Innenfläche und einer Außenfläche des Stutzens ist ein Dichtelement, insbesondere ein Dichtring, vorgesehen, welcher beim Aufsetzen der Kappe auf das freie Stutzenende eine Abdichtung sicherstellt und diese auch in der ersten Rastposition beibehält. Der Stutzen weist ferner ein zweites Rastelement auf, mit welchem der Rastkörper nach einer weiteren axialen Bewegung, insbesondere Aufschraubbewegung, in einer zweiten Rastposition in Eingriff bringbar ist. Das zweite Rastelement ist auf den Rastkörper der Kappe derart abgestimmt, daß diese ohne Zerstörung nicht mehr vom Stutzen entfernt werden kann. Nach dem Abschluß sämtlicher Arbeiten zum Anschluß einer Abzweigleitung wird die Kappe in die zweite Rastposition übergeführt, so daß nachfolgend dauerhaft und funktionssicher die Abdichtung des Rohrstutzens gewährleistet ist, und ein unbeabsichtigtes und / oder unerwünschtes Lösen der Kappe unterbunden ist.

In einer weiteren Ausgestaltung der Erfindung ist im Anschlußbereich des Abzweigstutzens der Anbohrstutzen mit einem sphärischen Körper nach Art einer Kugel oder eines Eies oder dergleichen, versehen. Dies steht im Gegensatz zu bisher üblichen Ausführungsformen, gemäß welchen im Anschlußbereich der Stutzen lediglich als eine zylindrische Erweiterung, also mit einer vergrößerten Wanddicke ausgebildet wurde. Im Anschlußbereich können in zweckmäßiger Weise Rippen vorgesehen ein, deren Außenflächen bevorzugt innerhalb der sphärischen Kontur des Anschlußkörpers liegen. Durch die Rippen und/oder die zwischen den Rippen befindlichen Rillen oder dergleichen werden übermäßige Materialanhäufungen vermieden, welche beim Herstellen der Anbohrarmatur, insbesondere in einem Spritzverfahren, nachteilig wären. Der sphärische Körper ist ebenso wie der Anbohrstutzen und der Abzweigstutzen integraler Bestandteil der aus Kunststoff bestehenden Anbohrarmatur. Aufgrund des Anschlußkörpers wird in besonders zweckmäßiger Weise ermöglicht, daß der Abzweigstutzen für die gleiche Nennweite ausgelegt ist, wie das mittels der Anbohrarmatur anzubohrende bzw. angebohrte Rohr. Mit den bisherigen Anbohrarmaturen konnten an das Rohr nur Abzweigleitungen mit verminderten Nennmaßen angeschlossen werden.

Weiterbildungen und besondere Ausgestaltungen der Erfindung sind in den Unteransprüchen angegeben. Die Erfindung wird nachfolgend anhand der in der Zeichnung dargestellten besonderen Ausführungsbeispiele näher erläutert, ohne daß insoweit eine Beschränkung der Erfindung erfolgt. Es zeigen:
- Fig. 1: teilweise geschnitten und teilweise in einer seitlichen Ansicht die Anbohrarmatur,
- Fig. 2: eine weitere Ausführungsform, wobei der Bohrer sich in einer unteren Endposition nach dem Anbohren eines Rohres befindet,
- Fig. 3: die Anbohrarmatur gemäß Fig. 2, wobei der Bohrer sich in der oberen Grundposition befindet.

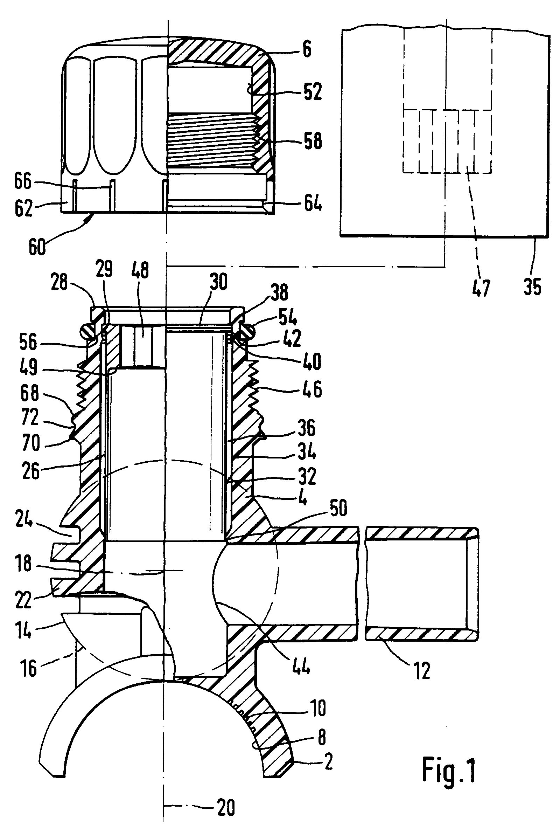

Fig. 1 zeigt teilweise geschnitten und teilweise in einer seitlichen Ansicht die Anbohrarmatur mit einem Sattelstück 2 und einem Anbohrstutzen 4, mit welchem eine hier explosionsartig dargestellte Kappe 6 verbindbar ist. Das erfindungsgemäße Sattelstück 2 enthält in seiner halbzylindrischen Innenfläche 8 in bekannter Weise eine Heizwicklung 10, mittels welcher eine Schweißverbindung mit einem hier nicht weiter dargestellten Rohr aus Kunststoff herstellbar ist, an dessen zylindrischer Außenfläche die Innenfläche des Sattelstücks 2 zur Anlage gebracht ist. In den Anbohrstutzen 4, welcher nachfolgend der Einfachheit halber als Stutzen bezeichnet wird, mündet ein Abzweigstutzen 12, mit welchem eine Abzweigleitung verbindbar ist. Im Anschlußbereich des Abzweigstutzens 12 an den Stutzen 4 ist ein Anschlußkörper 14 vorgesehen, welcher eine sphärische Außenkontur, insbesondere in Form einer Kugel, aufweist. Mit gestrichelten Linien 16 ist diese Kugelkontur angedeutet, deren Mittelpunkt 18 auf der Stutzenachse 20 liegt.

Anstelle der exakten Kugel- bzw. Kreisform kann der erfindungsgemäße Anschlußkörper 14 ferner eine längliche bzw. elliptische Kontur oder ähnlich aufweisen. Desweiteren kann dem Anschlußkörper eine polygonale Kontur zugrundeliegen. Der Anschlußkörper 14 besitzt ferner eine Anzahl von Rippen 22 sowie Rillen 24. Bei der dargestellten Ausführungsform liegen die Rippen 22 und ebenso die Rillen 24 in Radialebenen bezogen auf die Stutzenachse 22. Die Böden der Rillen 24 liegen bevorzugt im wesentlichen auf dem Außendurchmesser des Stutzens 4.

In einer alternativen Ausgestaltung der Erfindung kann der Anschlußkörper anstelle der ringförmigen Rippen und Rillen beispielsweise radiale, sternartig nach innen gerichtete Ausnehmungen aufweisen oder die Rippen können eine andere Ausrichtung zur Stutzenachse 20 aufweisen. Wesentlich ist für alle Ausführungsformen des sphärischen Anschlußkörpers 14 die Verstärkung und Aussteifung des Anschlußbereiches, unter Vermeidung einer zu großen, bei der Herstellung der Anbohrarmatur nachteiligen Materialanhäufung.

Desweiteren wird mittels des Anschlußkörpers 14 in besonders zweckmäßiger Weise ermöglicht, den Abzweigstutzen mit einem vergleichsweise großen Außendurchmesser auszubilden. So kann im Rahmen der Erfindung der Abzweigstutzen 12 im wesentlichen den gleichen Außendurchmesser aufweisen, wie das anzubohrende Rohr, auf dessen Außenfläche das Sattelstück 2 befestigt wird. Das genannte Rohr und die Anschlußleitung weisen hierbei die gleichen Nennweiten auf.

Im Stutzen 4 ist ein Bohrer 26 angeordnet, welcher in Richtung der Stutzenachse 20 bewegbar ist. An seinem ersten Ende, welches sich in der dargestellten Ausgangs- bzw. Endposition im Bereich des freien Endes 28 des Stutzens 4 befindet, besitzt der Bohrer 26 eine Anlagefläche 29, welche mit dem nachfolgend zu erläuternden Anschlag zusammenwirkt. Die Anlagefläche 29 ist Bestandteil der axialen Stirnfläche des Bohrers 26. Der Bohrer 26 enthält an seinem freien, gemäß Zeichnung oberen Ende eine radiale Erweiterung 30, welche insbesondere als ein Ringbund ausgebildet ist. Im übrigen besitzt der Bohrer 26 über seine gesamte Länge eine zylindrische Außenfläche 32, welche zur zylindrischen im wesentlichen glatten Innenfläche 34 des Stutzens 4 einen Ringspalt 36 aufweist. Der Bohrer 26 liegt mit seiner Anlagefläche 29, insbesondere der radialen Erweiterung 30, an einem ersten Anschlag 38 des Stutzens 4 an, wobei der erste Anschlag 38 einen kleineren Innendurchmesser aufweist als die radiale Erweiterung 30. Der Anschlag 38 ist als radial nach innen zur Längsachse gerichteter Ringbund oder Steg ausgebildet. Werkseitig wird der Bohrer 26 in die dargestellte Position im Stutzen 4 eingebaut, wobei die elastische Verformbarkeit des Kunststoffs der Anbohrarmatur das Einschieben des Bohrers 26 in den Stutzen 4 hinein ermöglicht. Die Anschläge 38, 40 verhindern vor der Montage das Herauslösen des Bohrers 26.

Weiterhin verhindert der obere erste Anschlag 38 nach dem Anbohren beim Zurückfahren des Bohrers 26 in die dargestellte Position ein unzulässiges Herausdrehen aus dem Stutzen. Von besonderer Bedeutung ist ferner, daß nach Abnahme der schematisch angedeuteten Anbohrvorrichtung 39 mittels des oberen ersten Anschlags 38 ein Herausreißen des Bohrers 26 aus dem Stutzen 40 infolge des in der angebohrten Rohrleitung vorherrschenden Drucks verhindert wird und das Medium, insbesondere Gas, nicht austreten kann. Die erfindungsgemäße Druckanbohrarmatur entspricht mit geringem Fertigungs- und Materialaufwand den Sicherheitsanforderungen zum Anbohren und Herstellen einer Abzweigleitung an eine druckführende Rohrleitung. Es sei festgehalten, daß die erfindungsgemäße Anbohrarmatur insbesondere in Versorgungssystemen für Wasser und Gas für die bekannten Druckbereiche zum Einsatz gelangt.

Am oberen freien Ende 28 enthält der Stutzen 4 innen als Arretierungsmittel einen zweiten Anschlag 40, welcher zum ersten Anschlag 38 in einem vorgegebenen Abstand in Richtung zum Sattelstück 2 angeordnet ist. Zwischen den beiden Anschlägen 38 und 40 ist somit eine Ringnut 42 zur Aufnahme der Erweiterung 30 des Bohrers vorhanden. Mit dem zweiten Anschlag 40 und der Erweiterung 30 wird eine Arretierung derart gewährleistet, daß vor der Montage und ebenso nach dem Anbohren ein unerwünschtes Herabgleiten des Bohrers 26 unterbunden wird. Vor allem nach dem Anbohren ist ein derartiges Herabgleiten oder eine Bewegung in Richtung zum Sattelstück 2 unerwünscht, da hierdurch die Mündung 44 des Abzweigstutzens 12 vom Bohrer 26 verschlossen würde und das Medium nicht mehr in die angeschlossene Leitung ordnungsgemäß strömen könnte.

Wie bereits erwähnt, wird zum Anbohren die Anbohrvorrichtung 39 mit dem Stutzen 4, insbesondere über dessen Außengewinde 46, gekoppelt werden. Die Anbohrvorrichtung enthält eine Leitspindel 47, welche mit den Polygonflächen 48 am oberen Ende des Bohrers 46 in Eingriff bringbar ist, so daß der Bohrer 26 axial im Stutzen 4 in Richtung zum Sattelstück 2 verschoben und gedreht werden kann. Der zweite Anschlag 40 weist im Vergleich mit dem Durchmesser des ersten Anschlags 38 einen vergrößerten Durchmesser derart auf, daß die Erweiterung 30 bei elastischer Aufweitung des zweiten Anschlags 40 über diesen hinwegbewegt werden kann. Die Erweiterung 30 ist in besonders zweckmäßiger Weise als Ringbund ausgebildet, welcher an der zylindrischen Innenfläche 34 des Stutzens 4 vorzugsweise dichtend anliegt. Der Außendurchmesser des Ringbundes 30 ist auf den Innendurchmesser der Innenfläche 34 derart abgestimmt daß erfindungsgemäß eine Abdichtung und / oder gute Führung und / oder Zentrierung im Stutzen 4 sichergestellt ist. Die Leitspindel 47 enthält ferner hier nicht weiter dargestellte Mittel, welche beispielsweise eine innere Stufe 49 des Bohrers 26 hintergreifen, um nach dem Anbohren ein Zurückfahren des Bohrers 26 in die dargestellte Ausgangs- bzw. Endposition zu ermöglichen.

Der Stutzen 4 enthält weiterhin in Richtung zum Sattelstück 2 betrachtet vor der Mündung 44 des Abzweigstutzens 12 einen radial nach innen gerichteten Steg 50, welcher an der zylindrischen Außenfläche 32 des Bohrers anliegt. Der Steg 50 ist zweckmäßig ringförmig ausgebildet und mit seinem Innendurchmesser auf den Außendurchmesser des Bohrers 26 derart abgestimmt, daß eine Führung und / oder Abdichtung sichergestellt ist. Für den Bohrer 26 ist somit eine zweifache Führung bzw. Abdichtung einerseits durch die radiale Erweiterung und/oder Ringbund 30 des Bohrers und andererseits durch die radial nach innen gerichteten Steg 50 des Stutzens 4 erreicht. Mit geringem Fertigungs- und Materialaufwand ist eine funktionsgerechte doppelte und axial beabstandete Führung und / oder Abdeckung des Bohrers 26 auch während des Anbohrens sichergestellt. Die Materialpaarung des Metall-Bohrers 26 und des aus Kunststoff bestehenden Stutzens gewährleistet gleichwohl geringe Reibverluste und das Anbohren kann mit vergleichsweise geringem Kraftaufwand durchgeführt werden, zumal im übrigen zwischen der Außenfläche 32 des Bohrers und der Innenfläche 34 des Stutzens der bereits erläuterte Ringspalt 36 vorhanden ist. In bevorzugter Weise dient der Steg 50 erfindungsgemäß auch als Begrenzung des axialen Vorschubs des Bohrers 2 beim Anbohren.

Der Anbohrstutzen 4 ist mittels der Kappe 6 verschließbar, welche in Fig. 1 in der abgenommenen Position dargestellt ist. Die Kappe 6 besitzt innen eine zylindrische Dichtfläche 52, welcher ein Dichtring 54 des Stutzens 4 zugeordnet ist. Die Dichtfläche schließt im Inneren der Kappe an den Boden 53 an. Der Dichtring 54 ist im Bereich des freien Endes 28 des Stutzens 4 in einer äußeren Ringnut 56 angeordnet. Alternativ kann der Dichtring in der Kappe 6 angeordnet sein, während die zugeordnete Dichtfläche am freien Ende 28 des Stutzens 4 außen angeordnet ist. Von Bedeutung ist, daß die Dichtfläche 52 zylindrisch ausgebildet ist, so daß die Dichtwirkung bereits dann erzielt wird, wenn die Kappe 6 erst teilweise auf den Anbohrstutzen 4 gesetzt ist. Die Kappe 6 weist in Richtung zu ihrem offenen Ende hin anschließend an die Dichtfläche 52 ein Innengewinde 58 auf, welches mit dem Außengewinde 46 des Stutzens 4 in Eingriff bringbar ist. Am offenen Ende 60 besitzt die Kappe 6 wenigstens einen Rastkörper 62. Dieser Rastkörper 62 weist in zweckmäßiger Weise einen radial nach innen gerichteten Haken 64 auf. Das offene Ende 60 der Kappe 6 ist mit einer Anzahl von Schlitzen 66 versehen, so daß über den Umfang verteilt eine Anzahl der genannten Rastkörper 62 vorhanden ist, welche elastisch federnd radial nach außen aufspreizbar sind.

Dem oder den Rastkörpern 62 ist außen am Stutzen 4 ein erstes Rastelement 68 zugeordnet. Beim Aufsetzen, insbesondere beim Aufschrauben, der Kappe 6 muß ein vorgegebenes Widerstandsmoment überwunden werden, damit der Rastkörper 62 über das erste Rastelement 68 hinwegbewegt werden kann. Der Rastkörper 62 und insbesondere dessen innerer Haken 64 ist mit seinem Innendurchmesser derart auf das erste Rastelement 68 abgestimmt, daß das Herstellen der Schnappverbindung einen wesentlich größeren Kraftaufwand erfordert als das Aufsetzen bzw. das Aufschrauben der Kappe 6. Sobald der Rastkörper 2 über das erste Rastelement 68 hinwegbewegt und/oder mit diesem in Eingriff gebracht ist, hat die Kappe 6 ihre erste Rastposition eingenommen. Die Schnappverbindung ist erfindungsgemäß derart ausgelegt, daß die Kappe 6 aus dieser ersten Rastposition wieder herausbewegt werden kann, um bedarfsweise ganz vom Anbohrstutzen 4 gelöst zu werden. Nach dem Anbohren ist während der Montage somit eine vorläufige Festlegung der Kappe 6 auf dem Anbohrstutzen 4 gewährleistet, wobei mittels des Dichtrings 54 eine funktionssichere Abdichtung in vollem Umfang bereits gewährleistet ist.

Sind die Montagearbeiten dann so weit fortgeschritten, daß weitere Überprüfungen einschließlich einer Abnahme der Kappe 6 nicht mehr erforderlich sind, so wird die Kappe 6 in ihre endgültige und gesicherte Position gebracht. In Richtung zum Sattelstück 2 besitzt der Stutzen 4 ein zweites Rastelement 70, welches einen größeren Außendurchmesser als das erste Rastelement 68 aufweist. Ist die Kappe 6 in Richtung zum Sattelstück 2 weiterbewegt worden, so ist ein weiter erhöhter Widerstand zu überwinden, bis der Rastkörper 62, insbesondere dessen Haken 64, über das zweite Rastelement 70 hinwegbewegt ist und dieses hintergreift. In der nunmehr eingenommenen zweiten Rastposition ist die Kappe 6 bezüglich des Stutzens 4 endgültig und dauerhaft gesichert. Die Kappe 6 kann zerstörungsfrei nicht mehr vom Anbohrstutzen entfernt und/oder abgedreht werden. Wie ersichtlich, ist zwischen den beiden Rastelementen 68, 70 eine weitere Ringnut 72 vorhanden, in welche der Rastkörper 62 bzw. dessen Haken 64 in der genannten ersten Rastposition eingreift. Die Tiefe der Ringnut 72 und/oder der Außendurchmesser des ersten Rastelements 68 sind auf den Rastkörper 62 derart abgestimmt, daß die Kappe 6 zum einen wieder abgenommen werden kann, zum anderen aber in Richtung zum Sattelstück 2 bewegt werden kann, um danach die genannte zweite gesicherte Rastposition einzunehmen.

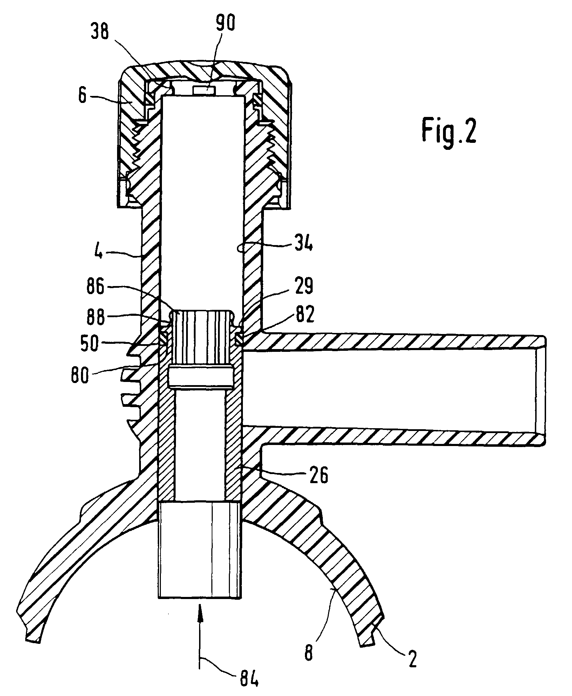

Fig. 2 zeigt eine weitere wesentliche Ausführungsform der Anbohrarmatur, wobei der Bohrer 26 eine zweite Position einnimmt, in welcher er sich nach dem Anbohren des hier nicht dargestellten Rohres befindet. Der Bohrer 26 enthält im Bereich seines oberen Endes in einer Ringnut 80 eine Dichtung 82, welche an der zylindrischen Innenfläche 34 des Stutzens 4 dichtend anliegt. Die Dichtung 82 ist als elastomerer Dichtring und / oder O-Ring ausgebildet. Bei dieser besonderen Ausgestaltung wird der Bohrer bei der Montage von der Innenfläche 8 des Sattelstücks 2 in Richtung des Pfeiles 84 in den Stutzen 4 eingeführt. Die elastische Dichtung 82 wird hierbei problemlos über den radial nach innen gerichteten Steg 50 des Stutzens 4 bei Überwindung einer vorgebbaren Kraft hinwegbewegt. Beim Anbohren bildet gleichermaßen jedoch der Steg 50 eine hinreichende Begrenzung der Bohrerbewegung. Ferner besitzt der Bohrer 26 die Anlagefläche 29, welche als Ringfläche ausgebildet ist und über welche ein Ansatz 86 hinausragt. Der Ansatz enthält außen eine Ringnut 88, welche Bestandteil der Arretierungsmittel ist. Die Arretierungsmittel enthalten ferner am oberen, freien Ende am ersten Anschlag 38, welcher wiederum als radial nach innen gerichteter Ringbund ausgebildet ist, zusätzlich wenigstens eine radial nach innen gerichtete Nase 90. Zweckmäßig sind über den Umfang verteilt mehrere derartige Nasen oder Nocken vorgesehen. Der Ansatz 86 und die Ringnut einerseits sowie der Anschlag 28 und die Nasen oder Nocken 90 andererseits sind derart aufeinander abgestimmt, daß in der oberen Ausgangs- bzw. Endposition die Arretierung des Bohrers 26 gewährleistet ist. Hierbei befindet sich der Ansatz 86 innerhalb des ringförmigen Anschlages 38, wobei die wenigstens eine Nase 90 in die Ringnut 88 eingreift.

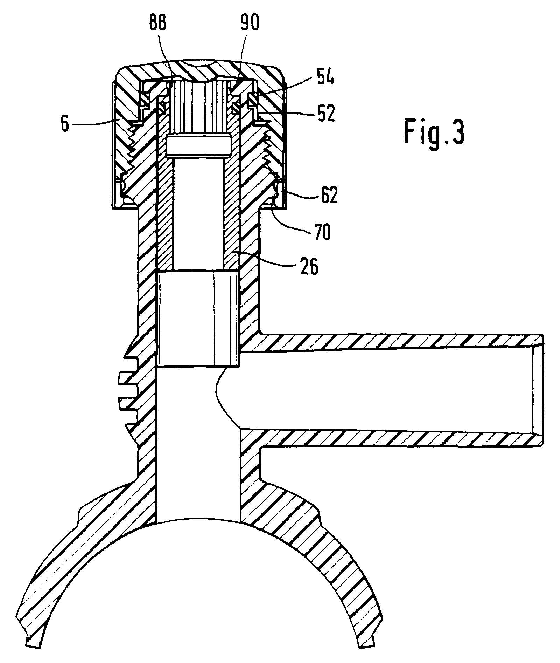

Fig. 3 zeigt den Bohrer 26 in seiner oberen Endposition nach dem Anbohren. Wie erwähnt greifen die Nasen oder Nocken 90 in die Ringnut 88 des Bohrers 26 ein. Die Kappe 6 ist auf den Stutzen in der erläuterten Weise fest aufgeschraubt, wobei die Rastkörper 62 bereits über das zweite Rastelement 70 geschoben sind und dieses hintergreifen, so daß die Kappe 6 ihre zweite gesicherte Rastposition einnimmt. Der Dichtring 54 liegt an der zugeordneten Dichtfläche 52 im Inneren der Kappe 6 dichtend an.

### Bezugszeichen

- 2: Sattelstück
- 4: Anbohrstutzen
- 6: Kappe
- 8: Innenfläche
- 10: Heizwicklung
- 12: Abzweigstutzen
- 14: Anschlußkörper
- 16: gestrichelte Linie
- 18: Mittelpunkt von 14
- 20: Stutzenachse
- 22: Rippe
- 24: Rille
- 26: Bohrer
- 28: freies Ende von 4
- 29: Anlagefläche von 26
- 30: radiale Erweiterung von 26
- 32: Außenfläche von 26
- 34: Innenfläche von 4
- 36: Ringspalt
- 38: erster Anschlag von 4
- 39: Anbohrvorrichtung
- 40: zweiter Anschlag von 4
- 42: Ringnut
- 44: Mündung von 12
- 46: Außengewinde
- 47: Leitspindel
- 48: Polygonfläche
- 49: Stufe in 26
- 50: Steg in 4
- 52: Dichtfläche
- 53: Boden von 6
- 54: Dichtring
- 56: äußere Ringnut
- 58: Innengewinde von 6
- 60: offenes Ende von 6
- 62: Rastkörper
- 64: Haken
- 66: Schlitz
- 68: erstes Rastelement
- 70: zweites Rastelement
- 72: weitere Ringnut
- 80: Ringnut in 26
- 82: Dichtung
- 84: Pfeil
- 86: Ansatz
- 88: Ringnut
- 90: Nase / Nocke

## Patentansprüche

1. Anbohrarmatur, welche mit einem anzubohrenden Rohr, insbesondere durch Schweißen verbindbar ist, enthaltend einen Stutzen (4), in welchem ein Bohrer (26) axial bewegbar angeordnet ist und mit welchem ein Abzweigstutzen (12) verbunden ist, dadurch gekennzeichnet, daß in dem Stutzen (4) der Bohrer (26) unmittelbar geführt ist, daß der Bohrer (26) an seinem oberen, freien Ende eine Erweiterung (30) oder einen Dichtring (54) aufweist, daß die Innenfläche (34) des Stutzens (4) im wesentlichen zylindrisch ausgebildet ist, an welcher der Bohrer (26) mittels der Erweiterung (30) oder dem Dichtring (54) anliegt, und daß der Bohrer (26) mittels einer mit dem Stutzen (4) verbindbaren Anbohrvorrichtung (39) entlang der Innenfläche (34) des Stutzens (4) axial bewegbar ist.

2. Anbohrarmatur nach Anspruch, dadurch gekennzeichnet, daß der Stutzen (4) einen ersten Anschlag (38) aufweist, an welchem der Bohrer (26) mittels einer Anlagefläche (29) zur Anlage bringbar ist oder daß die Anlagefläche (29) an der radialen Erweiterung (30) des Bohrers (26) angeordnet ist oder daß an die ringförmig ausgebildete Anlagefläche (29) zum freien Ende ein Ansatz (86) anschließt.

3. Anbohrarmatur nach Anspruch 1 oder 2, dadurch gekennzeichnet, daß der Stutzen (4) einen zweiten Anschlag (40) aufweist, über welchen die Erweiterung (30) des Bohrers (26) bei Überwindung einer vorgebbaren Kraft hinwegbewegbar ist und / oder daß axial zwischen dem ersten Anschlag (38) und dem zweiten Anschlag (40) eine Ringnut (42) vorhanden ist, in welche die Erweiterung (30) des Bohrers (26) vor der Montage und / oder nach dem Anbohren angeordnet ist.

4. Anbohrarmatur nach Anspruch 2, dadurch gekennzeichnet, daß der erste Anschlag (38) wenigstens eine radial nach innen gerichtete Nocken (90) aufweist und daß der Bohrer (26) im Ansatz (86) eine Ringnut (88) aufweist, in welche die genannte Nocke (90) vor der Montage und / oder nach dem Anbohren eingreift.

5. Anbohrarmatur, insbesondere nach einem der Ansprüche 1 bis 4, dadurch gekennzeichnet, daß im Inneren des Stutzens (4) ein radial nach innen gerichteter Steg (50) vorgesehen ist, welcher an der Außenfläche (32) des Bohrers (26) anliegt und / oder daß der Steg (50) im Stutzen (4) oberhalb eines Mündungsbereiches (40) des Abzweigstutzens (12) in den Stutzen (4) angeordnet ist und / oder daß der Steg (50) dichtend an der zylindrischen Außenfläche (32) des Bohrers (26) anliegt.

6. Anbohrarmatur nach einem der Ansprüche 1 bis 5, dadurch gekennzeichnet, daß zwischen der zylindrischen Innenfläche (34) und der zylindrischen Außenfläche (32) des Bohrers (26) ein Ringspalt (36) vorgesehen ist, welcher sich in der Ruheposition des Bohrers (26) über einen wesentlichen Teil der Gesamtlänge (26) erstreckt, und / oder daß der Ringspalt (36) axial zwischen der radialen Erweiterung oder den Dichtring (54) des Bohrers (26) und dem genannten radial nach innen gerichteten Steg (50) angeordnet ist.

7. Anbohrarmatur. insbesondere nach einem der Ansprüche 1 bis 6, dadurch gekennzeichnet, daß im Anschlußbereich des Abzweigstutzens (12) am Stutzen (4) ein Anschlußkörper (14) vorgesehen ist, welche eine sphärische Kontur, insbesondere einer Kugel oder eines Ellipsoids, aufweist und / oder daß der Anschlußkörper (14) Rippen (22) und / oder Rillen (24) im wesentlichen innerhalb der genannten sphärischen Außenkontur enthält.

8. Anbohrarmatur nach Anspruch 7, dadurch gekennzeichnet, daß der Abzweigstutzen (12) zum Anschluß eines derartigen Rohres ausgebildet ist, welches im wesentlichen den gleichen Durchmesser aufweist wie das mittels der Anbohrarmatur anzubohrende Rohr.

9. Anbohrarmatur, insbesondere nach einem der Ansprüche 1 bis 8, dadurch gekennzeichnet, daß eine Kappe (6), mittels welcher der Stutzen (4) verschließbar ist, mittels einer Schnappverbindung mit dem Stutzen (4) verbindbar ist, wobei die Kappe (6) und der Stutzen (4) miteinander korrespondierende Rastkörper (62) und Rastelemente (68, 70) aufweisen, und / oder daß die Rastkörper (62) im Bereich des offenen Endes (60) der Kappe (6) angeordnet sind und an ihrer Innenfläche einen Haken (64) aufweisen und / oder daß über den Umfang der Kappe (6) verteilt eine Anzahl derartiger Rastkör per (62) durch Schlitze voneinander getrennt angeordnet sind.

10. Anbohrarmatur nach Anspruch 9, dadurch gekennzeichnet, daß der Stutzen (4) ein erstes Rastelement (68) und axial beabstandet ein zweites Rastelement (80) aufweist, wobei zwischen den beiden Rastelementen (68, 70) vorzugsweise eine Ringnut (72) angeordnet ist, daß beim Aufsetzen der Kappe (6) nach Überwinden eines vorgegebenen Widerstandsmoments die Kappe (6) zunächst in eine erste Rastposition bewegbar ist, aus welcher die Kappe (6) wieder herausgelöst werden kann, und daß nach Überwinden eines weiteren, vorzugsweise erhöhten Widerstandsmoments, die Kappe (6) in eine zweite gesicherte Rastposition bewegbar ist, aus welcher die Kappe (6) nicht mehr gelöst werden kann.

11. Anbohrarmatur nach Anspruch 9 oder 10, dadurch gekennzeichnet, daß zwischen der Kappe (6) und dem Anbohrstutzen (4) ein Dichtring (54) angeordnet ist, welchem eine zylindrische Dichtfläche (52) zugeordnet ist, und / oder daß die Kappe (6) mit dem Stutzen (4) über eine Gewindeverbindung (46, 58) verbindbar ist und / oder daß das Außengewinde (46) des Stutzens (4) zwischen dessen freien Ende (28) und dem ersten Rastelement (68) vorgesehen ist, und / oder daß der Dichtring (54) im Bereich des freien Endes (28) der Anbohrarmatur und die korrespondierende zylindrische Dichtfläche (52) im Inneren der Kappe (6), insbesondere an deren Boden (53) anschließend, angeordnet ist oder umgekehrt.
